(19) Europäisches Patentamt

European Patent Office

Office européen des brevets

(11) **EP 1 382 956 B1**

(12) **EUROPÄISCHE PATENTSCHRIFT**

(45) Veröffentlichungstag und Bekanntmachung des Hinweises auf die Patenterteilung:
**04.01.2006  Patentblatt 2006/01**

(51) Int Cl.:
***G01M 17/007*** *(2006.01)*

(21) Anmeldenummer: **03450170.0**

(22) Anmeldetag: **10.07.2003**

(54) **Verfahren zur Simulation des Fahrverhaltens von Fahrzeugen**

Procedure for simulating the driving performance of vehicles

Procédé pour la simulation du comportement routier de vehicules

(84) Benannte Vertragsstaaten:
**AT BE BG CH CY CZ DE DK EE ES FI FR GB GR HU IE IT LI LU MC NL PT RO SE SI SK TR**

(30) Priorität: **19.07.2002  AT 110302**

(43) Veröffentlichungstag der Anmeldung:
**21.01.2004  Patentblatt 2004/04**

(73) Patentinhaber: **AVL List GmbH**
**8020 Graz (AT)**

(72) Erfinder: **Schöggl, Peter Dipl. Ing. Dr.**
**8151 Hitzendorf (AT)**

(74) Vertreter: **Babeluk, Michael**
**Patentanwalt,**
**Mariahilfer Gürtel 39/17**
**1150 Wien (AT)**

(56) Entgegenhaltungen:
**US-A- 6 079 258**

**Beschreibung**

Die Erfindung betrifft ein Verfahren zur Simulation des Fahrverhaltens von Fahrzeugen gemäß dem Oberbegriff von Patentanspruch 1.

Es ist bekannt, das Verhalten von Kraftfahrzeugen auf Prüfständen zu simulieren, da auf diese Weise eine wesentlich schnellere, effizientere und kostengünstigere Untersuchung des Verhaltens eines Kraftfahrzeugs möglich ist, als bei Tests am realen Fahrzeug auf der Straße. Das Dokument US-A-6 079 258 offenbart eine solche Simulation. Da jedoch am Prüfstand nur wenige Variable direkt gemessen werden können, nämlich hauptsächlich die Motordrehzahl und das Motordrehmoment, ist es erforderlich, über ein Simulationsmodell die übrigen, nicht messbaren Variablen zu berechnen. In das Simulationsmodell gehen die relevanten Merkmale des simulierten Kraftfahrzeugs ein, wie etwa Masse, Luftwiderstand, Übersetzungsverhältnisse im Antriebsstrang, Elastizitäten im Antriebsstrang und viele andere. Mit einem sorgfältig erstellten und anhand eines realen Fahrzeugs kalibrierten Simulationsmodell können in einfacher Weise realitätsnahe und zuverlässige Aussagen über das Verhalten des realen Fahrzeugs unter verschiedenen Bedingungen gewonnen werden. Das Resultat der Versuche am Prüfstand wird in der vorliegenden Beschreibung allgemein als Bewertungsgröße bezeichnet. Je nach der konkreten Aufgabenstellung der Prüfstandssimulation kann eine große Vielzahl von Bewertungsgrößen bestimmt werden. Solche Bewertungsgrößen sind z.B. der Kraftstoffverbrauch in bestimmten Situationen oder bei bestimmten Fahrzyklen, bestimmte Arten von Abgasemission oder etwa die Amplitude von Ruckelschwingungen zufolge der Durchführung bestimmter Fahrmanöver. Es ist auch möglich, komplexere Bewertungsgrößen wie etwa Fahrbarkeitsindizes oder dergleichen zu verwenden.

Es hat sich nun herausgestellt, dass auch bei bestmöglicher Ausbildung des Simulationsmodells für das Fahrzeug nicht in allen Fällen die Möglichkeit besteht, eine Bewertungsgröße so genau und zuverlässig zu bestimmen, dass eine zutreffende Aussage über das simulierte Fahrzeug möglich ist. Insbesondere betrifft dies transiente Phänomene mit höheren Frequenzen, was dadurch bedingt ist, dass die verfügbaren Prüfstände eine größere Trägheit aufweisen als der Antriebsstrang eines Kraftfahrzeugs.

Aufgabe der vorliegenden Erfindung ist es, diesen Nachteil zu vermeiden und ein Verfahren anzugeben, mit dem auch höherfrequente oder schlagartig auftretende Phänomene entsprechend abgebildet werden können.

Erfindungsgemäß ist in einer ersten Ausführungsvariante der Erfindung vorgesehen, dass in einem weiteren Simulationsmodell höherfrequente Änderungen von an sich messbaren Variablen berechnet werden und in Überlagerung mit den tatsächlichen Messwerten bei der Berechnung der Bewertungsgröße berücksichtigt werden. Grundgedanke dieser Ausführungsvariante ist, dass der Prüfstand selbst in herkömmlicher Weise betrieben wird, jedoch für die Berechnung der Bewertungsgröße ein zusätzliches Simulationsmodell verwendet wird, bei dem den an sich messbaren Variablen, die nicht in Realität nachvollziehbaren höherfrequenten Schwankungen überlagert werden. Ein Anwendungsgebiet der Erfindung liegt beispielsweise darin, dass Schläge im Antriebsstrang, die durch stoßartige Momentenbelastung verursacht sind, entsprechend abgebildet werden können, obgleich der Prüfstand aufgrund seiner mangelnden Dynamik nicht dazu geeignet ist, die zugehörigen Schwankungen der Motordrehzahl und des Motormoments korrekt nachzuvollziehen. Bei der Bewertung wird jedoch die Auswirkung eines sogenannten Lastschlages entsprechend berücksichtigt, wobei auch abgeleitete Variable, wie etwa das Innengeräusch entsprechend berücksichtigt werden können.

In einer besonders begünstigten Ausführungsvariante der Erfindung ist vorgesehen, dass der Motor von einer elektronischen Steuerungseinrichtung gesteuert ist, die der des realen Fahrzeugs entspricht und dass die Steuerungseinrichtung mit den am Prüfstand gemessenen Werten für messbare Variable und mit den in dem ersten Simulationsmodell berechneten Werten für nicht messbare Variable versorgt wird. Insbesondere ist es dabei vorteilhaft, wenn die Steuerungseinrichtung adaptiv ist und dass zur Adaption die Bewertungsgröße herangezogen wird. Moderne Motoren werden von einer solchen elektronischen Steuerungseinrichtung gesteuert, die auf der Basis von Kennfeldern arbeitet und auf vielfältige Weise in das Management des Motors eingreift, indem beispielsweise der Einspritzzeitpunkt und die Einspritzmenge festgelegt werden. Bei sogenannten adaptiven Steuerungseinrichtungen sind die verwendeten Kennfelder nicht unveränderbar festgelegt, sondern werden im Zeitablauf in Abhängigkeit von verschiedenen Bewertungsgrößen langsam verändert, um beispielsweise Änderungen durch Verschleiß auszugleichen. Es hat sich herausgestellt, dass es für den laufenden Betrieb der Steuerungseinrichtung durchaus ausreicht, die Originalwerte der gemessenen Variablen und die übrigen Werte aus dem ersten Simulationsmodell zu verwenden. Für die Adaption der Steuerungseinrichtung ist es jedoch sehr vorteilhaft, auch die höherfrequenten Schwankungen zu berücksichtigen, die in erfindungsgemäßer Weise im weiteren Simulationsmodell durch Überlagerung gewonnen werden. Auf diese Weise kann die Adaption der Motorsteuerungseinrichtung so vorgenommen werden, dass nach mehrmaligem Auftreten von Lastschlägen eine Änderung der Kennfelder in einer Weise erfolgt, die ein solches Phänomen in Hinkunft unterbindet.

In einer weiteren alternativen Ausführungsvariante des erfindungsgemäßen Verfahrens ist vorgesehen, dass in dem Simulationsmodell höherfrequente Änderungen von an sich messbaren Variablen berechnet werden und in Überlagerung mit den tatsächlichen Messwerten bei der Berechnung der Bewertungsgröße berücksichtigt werden. Im Unterschied zu der oben beschriebenen Ausführungsvariante werden hier auch für die Steuerung des Prüfstandes die mit den höherfrequenten Änderungen angereicherten Werte der Variablen verwendet, so dass eine Vereinfachung des Aufbaus möglich ist. Man macht sich bei dieser Ausführung die Tatsache zunutze, dass der Prüfstand aufgrund seiner Trägheit praktisch selbsttätig die höherfrequenten Anteile herausfiltert, so dass eine Interferenz nicht oder im geringen Ausmaß auftritt. Um die Gefahr eines solchen Phänomens weiter zu verringern, kann vorgesehen sein, dass die für die Steuerung des Prüfstands verwendeten Werte der Variablen einer Tiefpassfilterung unterzogen werden.

Weiters betrifft die vorliegende Erfindung einen Prüfstand zur Simulation des Fahrverhaltens von Fahrzeugen, mit einer Bremsvorrichtung, an die der Motor des Fahrzeugs anzukoppeln ist, mit Messgeräten für messbare Variable, wie Motordrehzahl und Motordrehmoment und mit einer elektronischen Prüfstandssteuerungseinrichtung zur Steuerung der Bremsvorrichtung, in der ein erstes Simulationsmodell gespeichert ist, das Simulationswerte von Variablen berechnet, die den Fahrzustand des Fahrzeugs darstellen, indem die Reaktion des Fahrzeugs auf das Verhalten des Motors und die unmittelbar zuvor bestimmten Werte der Variablen berechnet wird, wobei eine Bewertungseinheit vorgesehen ist, die aufgrund der am Prüfstand gemessenen Werte und der mit dem Simulationsmodell daraus berechneten Werte für nicht messbare Variable, wie die Fahrzeuggeschwindigkeit o. dgl., mindestens eine Bewertungsgröße berechnet.

Erfindungsgemäß ist vorgesehen, dass eine Überlagerungseinheit vorgesehen ist, in der ein weiteres Simulationsmodell gespeichert ist, das höherfrequente Änderungen von an sich messbaren Variablen berechnet und den tatsächlichen Messwerten bei der Berechnung der Bewertungsgröße überlagert.

Gemäß einer Ausführungsvariante ist die Überlagerungseinheit adaptiv und dient direkt zur Ansteuerung der elektronischen Prüfstandssteuerungseinrichtung und/oder der Bremsvorrichtung.

Das erfindungsgemäße Verfahren und die erfindungsgemäße Vorrichtung sind auch anwendbar um beispielsweise höherfrequente Schwankungen zu berücksichtigen, die aufgrund von Schlupfregelungsprogrammen oder dergleichen verursacht werden, die in modernen Kraftfahrzeugen eingebaut sind.

Ein wesentlicher Grundgedanke der Erfindung besteht darin, dass im Gegensatz zu bekannten Verfahren und Vorrichtungen die starre Verknüpfung der Motordrehzahl mit der Geschwindigkeit des Fahrzeugkörpers aufgehoben wird und somit ein zusätzlicher Freiheitsgrad in das System eingeführt wird, der durch das weitere Simulationsmodell abgedeckt wird. Auf diese Weise ist es möglich auch hochfrequente Phänomene entsprechend abzubilden und zu berücksichtigen, die aufgrund der Trägheit des Prüfstandes ansonsten nicht darstellbar wären.

In der Folge wird die Erfindung anhand der in den Figuren dargestellten Ausführungsbeispiele näher erläutert. Es zeigen:

Fig. 1     eine erste Ausführungsvariante der Erfindung in einem schematischen Blockdiagramm;

Fig. 2     ein Detail einer weiteren Ausführungsvariante der Erfindung; und

Fig. 3     ein Diagramm, das den am Prüfstand gemessenen Verlauf der Motordrehzahl und den in der Überlagerungseinheit berechneten Verlauf der Drehzahl gegenüberstellt.

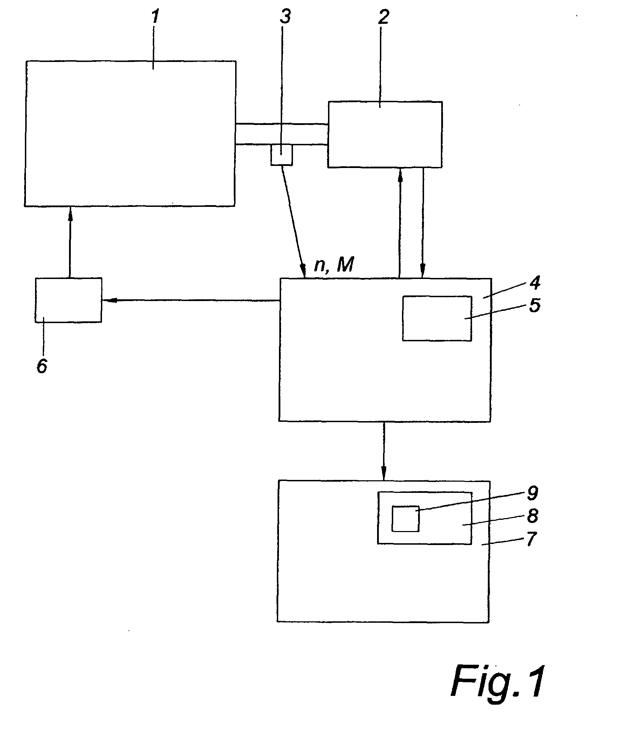

Das Blockdiagramm von Fig. 1 zeigt einen Motor 1, der als Brennkraftmaschine mit innerer Verbrennung ausgebildet ist und auf einem Prüfstand an eine elektrische Bremsvorrichtung 2 angeschlossen ist. An der Motorwelle wird über Messgeräte 3 die Motordrehzahl n und das Motordrehmoment M gemessen. Eine Prüfstandsteuerungseinrichtung 4 dient dazu, den Prüfstand so zu steuern, dass Motordrehzahl n und Motordrehmoment M möglichst den entsprechenden Werten an einem realen Fahrzeug unter den simulierten Bedingungen entsprechen. Zu diesem Zweck ist ein Simulationsmodell 5 vorgesehen, das Teil der Prüfstandssteuerungseinrichtung 4 ist und in dieser softwaremäßig installiert ist. Die Prüfstandssteuerungseinrichtung 4 steht bidirektional mit der Bremsvorrichtung 2 in Verbindung und wird von den Messgeräten 3 mit den entsprechenden Messwerten versorgt. Das erste Simulationsmodell 5 kann aus Teilmodellen bestehen, wie etwa einem Modell des Antriebsstranges, einem Modell der Aufhängung, einem aerodynamischen Modell usw. Durch die Prüfstandssteuerungseinrichtung 4 werden unter Verwendung des ersten Simulationsmodells 5 sämtliche Variablen berechnet, die für den Betrieb der Simulation erforderlich sind. So werden beispielsweise die nicht direkt messbaren Variablen, wie Fahrzeuggeschwindigkeit v, berechnet, um diese in eine Steuerungseinrichtung 6 einzugeben, die den Motor 1 steuert. Bei dieser Steuerungseinrichtung 6 handelt es sich um die gleiche Steuerungseinrichtung, wie sie auch im realen Fahrzeug zur Steuerung des Motors 1 vorgesehen ist. Falls erforderlich müssen von der Prüfstandssteuerungseinrichtung 4 auch sämtliche Sensorsignale, wie z.B. des Lenkwinkelsensors oder von Neigungssensoren berechnet und simuliert werden, da diese am Prüfstand sonst nicht zur Verfügung stehen. Weiters werden von der Prüfstandssteuerungseinrichtung 4 Messwerte bzw. berechnete Werte an eine Bewertungseinheit 7 ausgegeben, die die Werte berechnet, die als Ergebnis der Simulation benötigt werden. Teil der Bewertungseinheit 7 ist eine Überlagerungseinheit 8, in der die simulierte Drehzahl $n_{sim}$ gemäß folgender Gleichung 1 aus der gemessenen Drehzahl $n_m$ berechnet wird:

$$n_{sim} = n_m + \Delta n \qquad\qquad (1)$$

In analoger Weise wird das simulierte Motormoment $M_{sim}$ nach der folgenden Formel 2 berechnet:

$$M_{sim} = M_m + \Delta M \qquad\qquad (2)$$

Bei $\Delta n$ und $\Delta M$ handelt es sich um die berechneten höherfrequenten Anteile mit einer Frequenz von beispielsweise mehr als 8 Hz. Bei der Abstimmung der Überlagerungseinheit 8 muss die Berechnung von $\Delta n$ und $\Delta M$ so vorgenommen werden, dass die untere Grenzfrequenz gleich der oberen Grenzfrequenz des Prüfstandes ist. Teil der Überlagerungseinheit 8 ist ein weiteres Simulationsmodell 9, das zur Berechnung dieser Werte $\Delta n$ und $\Delta M$ dient.

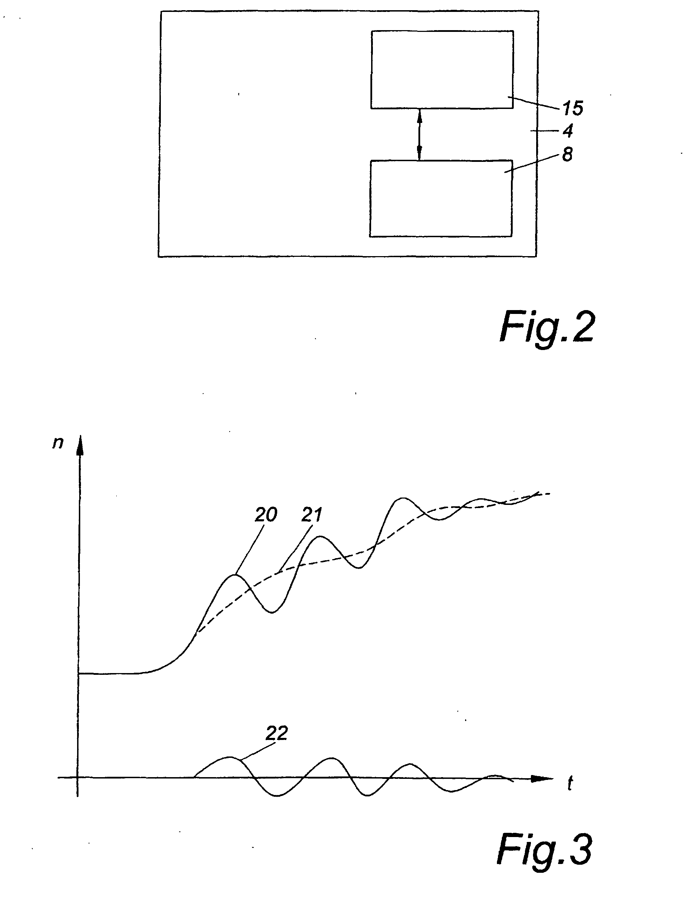

Bei der Ausführungsvariante von Fig. 2 ist in der Prüfstandssteuerungseinrichtung 4 ein allgemeines Simulationsmodell 15 enthalten. Dieses Simulationsmodell 15 steht mit einer Überlagerungseinheit 8 in Wechselwirkung, die die höherfrequenten Anteile der Drehzahl und des Moments berechnet und an das Simulationsmodell 15 zurückgibt.

In Fig. 3 ist in einem Diagramm die Motordrehzahl n über der Zeit t mit einer durchgezogenen Linie 20 dargestellt. Die unterbrochene Linie 21 stellt dabei den gemessenen Wert $n_m$ dar, der durch die Messgeräte 3 ermittelt wird. In dem Simulationsmodell 9 der Überlagerungseinheit 8 wird $\triangle n$ berechnet, das durch die Linie 22 dargestellt ist. Durch Addition von $n_m$ und $\triangle n$ ergibt sich $n_{sim}$ gemäß Kurve 20.

## Patentansprüche

1. Verfahren zur Simulation des Fahrverhaltens von Fahrzeugen auf einem Prüfstand, bei dem der Motor (1) des Fahrzeugs auf dem Prüfstand an eine elektronisch steuerbare Bremsvorrichtung (2) angekoppelt wird und ein erstes Simulationsmodell (5) Simulationswerte von Variablen berechnet, die den Fahrzustand des Fahrzeugs darstellen, indem die Reaktion des Fahrzeugs auf das Verhalten des Motors (1) und die unmittelbar zuvor bestimmten Werte der Variablen berechnet wird, wobei aufgrund der am Prüfstand gemessenen Werte für messbare Variable, wie Motordrehzahl (n) und Motordrehmoment (M) und der mit dem Simulationsmodell (5) daraus berechneten Werte für nicht messbare Variable, wie die Fahrzeuggeschwindigkeit (v) o. dgl., mindestens eine Bewertungsgröße (w) berechnet wird, **dadurch gekennzeichnet, dass** in einem weiteren Simulationsmodell (9) höherfrequente Änderungen von an sich messbaren Variablen berechnet werden und in Überlagerung mit den tatsächlichen Messwerten bei der Berechnung der Bewertungsgröße berücksichtigt werden.

2. Verfahren nach Anspruch 1, **dadurch gekennzeichnet, dass** die Simulationswerte, die in dem ersten Simulationsmodell (5) aufgrund der am Prüfstand tatsächlich gemessenen Werte für messbare Variable berechnet werden, dazu verwendet werden, den Prüfstand anzusteuern, jedoch die in dem weiteren Simulationsmodell (9) berechneten Simulationswerte ausschließlich für die Berechnung der Bewertungsgröße verwendet werden, indem den am Prüfstand gemessenen Werte für messbare Variable die berechneten höherfrequenten Änderungen überlagert werden.

3. Verfahren nach einem der Ansprüche 1 oder 2, **dadurch gekennzeichnet, dass** der Motor von einer elektronischen Steuerungseinrichtung (6) gesteuert ist, die der des realen Fahrzeugs entspricht und dass die Steuerungseinrichtung (6) mit den am Prüfstand gemessenen Werten für messbare Variable und mit den in dem ersten Simulationsmodell (5) berechneten Werten für nicht messbare Variable versorgt wird.

4. Verfahren nach Anspruch 3, **dadurch gekennzeichnet, dass** die Steuerungseinrichtung (6) adaptiv ist und dass zur Adaption die Bewertungsgröße (w) herangezogen wird.

5. Verfahren zur Simulation des Fahrverhaltens von Fahrzeugen auf einem Prüfstand, bei dem der Motor (1) des Fahrzeugs auf dem Prüfstand an eine elektronisch steuerbare Bremsvorrichtung (2) angekoppelt wird und ein Simulationsmodell (15) Simulationswerte von Variablen berechnet, die den Fahrzustand des Fahrzeugs darstellen, indem die Reaktion des Fahrzeugs auf das Verhalten des Motors (1) und die unmittelbar zuvor bestimmten Werte der Variablen berechnet wird, wobei aufgrund der am Prüfstand gemessenen Werte für messbare Variable, wie Motordrehzahl (n) und Motordrehmoment (m) und der mit dem Simulationsmodell daraus berechneten Werte für nicht messbare Variable, wie die Fahrzeuggeschwindigkeit (v) o. dgl., mindestens eine Bewertungsgröße (w) berechnet wird, **dadurch gekennzeichnet, dass** in dem Simulationsmodell (15) höherfrequente Änderungen von an sich messbaren Variablen berechnet werden und in Überlagerung mit den tatsächlichen Messwerten bei der Berechnung der Bewertungsgröße (w) berücksichtigt werden.

6. Verfahren nach Anspruch 5, **dadurch gekennzeichnet, dass** die für die Steuerung des Prüfstands verwendeten Werte der Variablen einer Tiefpassfilterung unterzogen werden.

7. Prüfstand zur Simulation des Fahrverhaltens von Fahrzeugen, mit einer Bremsvorrichtung (2), an die der Motor (1) des Fahrzeugs anzukoppeln ist, mit Messgeräten (3) für messbare Variable, wie Motordrehzahl (n) und Motordrehmoment (M) und mit einer elektronischen Prüfstandssteuerungseinrichtung (4) zur Steuerung der Bremsvorrichtung (2), in der ein erstes Simulationsmodell (5) gespeichert ist, das Simulationswerte von Variablen berechnet, die den Fahrzustand des Fahrzeugs darstellen, indem die Reaktion des Fahrzeugs auf das Verhalten des Motors (1) und die unmittelbar zuvor bestimmten Werte der Variablen berechnet wird, wobei eine Bewertungseinheit (7) vorgesehen ist, die aufgrund der am Prüfstand gemessenen Werte und der mit dem Simulationsmodell daraus berechneten Werte für nicht messbare Variable, wie die Fahrzeuggeschwindigkeit (v) o. dgl., mindestens eine Bewertungsgröße (w) berechnet, **dadurch gekennzeichnet, dass** eine Überlagerungseinheit (8) vorgesehen ist, in der ein weiteres Simulationsmodell (9) gespeichert ist, das höherfrequente Änderungen von an sich messbaren Variablen (n, M) berechnet und den tatsächlichen Messwerten bei der Berechnung der Bewertungsgröße (w) überlagert.

8. Prüfstand nach Anspruch 7, **dadurch gekennzeichnet, dass** die Überlagerungseinheit (8) adaptiv ist und direkt zur Ansteuerung der elektronischen Prüfstandssteuerungseinrichtung (4) und/oder der Bremsvorrichtung (2) dient.

9. Prüfstand nach Anspruch 7 oder 8, **dadurch gekennzeichnet, dass** die Überlagerungseinheit (8) in der Bewertungseinheit (7) vorgesehen ist.

10. Prüfstand nach Anspruch 7 oder 8, **dadurch gekennzeichnet, dass** die Überlagerungseinheit (8) in der Prüfstandssteuerungseinrichtung (4) vorgesehen ist.

11. Prüfstand nach einem der Ansprüche 7 bis 10, **dadurch gekennzeichnet, dass** eine elektronische Steuerungseinrichtung (6) zur Steuerung des Motors (1) vorgesehen ist, die der des realen Fahrzeugs entspricht und die mit der Prüfstandssteuerungseinrichtung (4) verbunden ist, um mit den Messwerten für messbare Variable und den in dem ersten Simulationsmodell (5) berechneten Werten für nicht messbare Variable versorgt zu werden.

12. Prüfstand nach Anspruch 11, **dadurch gekennzeichnet, dass** die Steuerungseinrichtung (6) adaptiv ist und dass zur Adaption die Bewertungsgröße herangezogen wird.

**Claims**

1. A method for simulating the driving behavior of vehicles on a test stand, in which the engine (1) of the vehicle is coupled on the test stand to an electronically controllable braking apparatus (2) and a first simulation model (5) calculates simulation values of variables representative of the driving state of the vehicle, such that the reaction of the vehicle to the behavior of the engine (1) and the directly previously determined values of the variable are calculated, with at least one evaluation value (w) being calculated as a result of the values for measurable variables as measured on the test stand such as engine speed (n) and engine torque (M) and the values for non-measurable variables as calculated with the simulation model (5) therefrom such as the vehicle speed (v) or the like, **characterized in that** higher-frequency changes of actually measurable variables are calculated in a further simulation model (9) and are considered in the calculation of the evaluation value by superimposing with the actual measured values.

2. A method according to claim 1, **characterized in that** the simulation values which are calculated in the first simulation model (5) on the basis of the values for measurable variables actually measured on the test stand are used for triggering the test stand, but the simulation values calculated in the further simulation model (9) are used exclusively for the calculation of the evaluation value, such that the calculated higher-frequency changes are superimposed on the values for measurable variables as measured on the test stand.

3. A method according to one of the claims 1 or 2, **characterized in that** the engine is controlled by an electronic control device (6) which corresponds to that of the real vehicle, and that the control device (6) is supplied with the values for measurable variables as measured on the test stand and with values for non-measurable variables as calculated in the first simulation model (5).

**4.** A method according to claim 3, **characterized in that** the control device (6) is adaptive and the evaluation value (w) is used for the adaptation.

**5.** A method for simulating the driving behavior of vehicles on a test stand, in which the engine (1) of the vehicle is coupled on the test stand to an electronically controllable braking apparatus (2) and a simulation model (15) calculates simulation values of variables representative of the driving state of the vehicle, such that the reaction of the vehicle to the behavior of the engine (1) and the directly previously determined values of the variable are calculated, with at least one evaluation value (w) being calculated as a result of the values for measurable variables as measured on the test stand such as engine speed (n) and engine torque (m) and the values for non-measurable variables as calculated with the simulation model therefrom such as the vehicle speed (v) or the like, **characterized in that** higher-frequency changes of actually measurable variables are calculated in the simulation model (15) and are considered in the calculation of the evaluation value (w) by superimposing with the actual measured values.

**6.** A method according to claim 5, **characterized in that** the values of the variables used for the control of the test stand are subjected to a low-pass filtering.

**7.** A test stand for simulating the driving behavior of vehicles, comprising a braking apparatus (2) to which the engine (1) of the vehicle will be coupled, measuring devices (3) for measurable variables such as engine speed (n) and engine torque (M), and an electronic test stand control device (4) for controlling the braking apparatus (2), in which a first simulation model (5) is stored which calculates simulation values of variables representative of the driving state of the vehicle, such that the reaction of the vehicle to the behavior of the engine (1) and the directly previously determined values of the variables are calculated, with an evaluation unit (7) being provided which calculates at least one evaluation value (w) as a result of the values as measured on the test stand and the values for non-measurable variables as calculated with the simulation model therefrom such as the vehicle speed (v) or the like, **characterized in that** a superposition unit (8) is provided in which a further simulation model (9) is stored which calculates higher-frequency changes of actually measurable variables (n, M) and superimposes the same to the actual measured values in the calculation of the evaluation value (w).

**8.** A test stand according to claim 7, **characterized in that** the superposition unit (8) is adaptive and is used directly for triggering the electronic test stand control device (4) and/or the braking apparatus (2).

**9.** A test stand according to claim 7 or 8, **characterized in that** the superposition unit (8) is provided in the evaluation unit (7).

**10.** A test stand according to claim 7 or 8, **characterized in that** the superposition unit (8) is provided in the test stand control device (4).

**11.** A test stand according to one of the claims 7 to 10, **characterized in that** an electronic control device (6) is provided for controlling the engine (1), which control device corresponds to that of the real vehicle and is connected with the test stand control device (4) in order to be supplied with the measured values for measurable variables and the values for non-measurable variables as calculated in the first simulation model (5).

**12.** A test stand according to claim 11, **characterized in that** the control device (6) is adaptive and that the evaluation value is used for the adaptation.

**Revendications**

**1.** Procédé de simulation du comportement de roulage de véhicules sur un banc d'essai, dans lequel le moteur (1) du véhicule sur le banc d'essai est couplé à un dispositif de freinage (2) pouvant être commandé de façon électronique, et un premier modèle de simulation (5) calcule des valeurs de simulation de variables, constituant l'état de roulage du véhicule, en ce que la réaction du véhicule au comportement du moteur (1) et aux valeurs, déterminées directement précédemment, des variables est calculée, sachant que, du fait des valeurs mesurées sur le banc d'essai, pour des variables mesurables, telles que la vitesse de rotation de moteur (n) et le couple de rotation de moteur (M) et les valeurs, calculées à partir de cela à l'aide du modèle de simulation (5), pour des valeurs non mesurables, telles que la vitesse de véhicule (v) ou analogue, on calcule au moins une grandeur d'évaluation (w), **caractérisé en ce que**, en un autre modèle de simulation (9) sont calculées des variations à fréquence plus élevée de variables mesurables en soi et, en superposition aux valeurs de mesure effectives, on les prend en considération lors du calcul de la grandeur d'évaluation.

2. Procédé selon la revendication 1, **caractérisé en ce que** les valeurs de simulation, calculées dans le premier modèle de simulation (5) d'après les valeurs effectivement mesurées sur le banc d'essai pour des variables mesurables, sont utilisées pour commander le banc d'essai, cependant les valeurs de simulation calculées dans l'autre modèle de simulation (9) sont utilisées exclusivement pour les calculs de la grandeur d'évaluation, **en ce qu'**aux valeurs mesurées au banc d'essai, pour des variables mesurables, sont superposées les variations calculées, à fréquence plus élevée.

3. Procédé selon l'une des revendications 1 ou 2, **caractérisé en ce que** le moteur est commandé par un dispositif de commande (6) électronique, dispositif correspondant à celui du véhicule réel, et **en ce que** le dispositif de commande (6) est alimenté avec les valeurs mesurées au banc d'essai, pour des variables mesurables, et avec les valeurs calculées dans le premier modèle de simulation (5), pour des variables non mesurables.

4. Procédé selon la revendication 3 **caractérisé en ce que** le dispositif de commande (6) est adaptatif, et **en ce que** la grandeur d'évaluation (w) est sollicitée pour l'adaptation.

5. Procédé de simulation du comportement de roulage de véhicules sur un banc d'essai, dans lequel le moteur (1) du véhicule est couplé au banc d'essai, à un dispositif de freinage (2) pouvant être commandé de façon électronique, et un modèle de simulation (15) calcule des valeurs de simulation de variable qui constituent l'état de roulage du véhicule, en ce que la réaction du véhicule, au comportement du moteur (1) et aux valeurs déterminées directement précédemment des variables, est calculée, sachant que, d'après les valeurs mesurées au banc d'essai pour des variables mesurables, telles que la vitesse de rotation de moteur (n) et le couple de rotation de moteur (M), et les valeurs, calculées à partir de cela avec le modèle de simulation, pour des variables non mesurables, telles que la vitesse de véhicule (v) ou analogue, est calculée au moins une grandeur d'évaluation (w), **caractérisé en ce que**, dans le modèle de simulation (15), des variations à fréquence plus élevée de variables mesurables en soi sont calculées et sont prises en considération, en superposition avec les valeurs de mesure effectives, lors du calcul de la grandeur d'évaluation (w).

6. Procédé selon la revendication 5, **caractérisé en ce que** les valeurs, utilisées pour la commande du banc d'essai, des variables, sont soumises à un filtrage de type passe-bas.

7. Banc d'essai pour la simulation du comportement en roulage de véhicules, avec un dispositif de freinage (2) auquel est couplé le moteur (1) du véhicule, avec des appareils de mesure (3) pour des variables mesurables, telles que la vitesse de rotation de moteur (n) et le couple de rotation de moteur (M), et avec un dispositif de commande de banc d'essai (4) électronique pour la commande du dispositif de freinage (2), dans lequel est stocké un premier modèle de simulation (5), calculant des valeurs de simulation de variables constituant l'état de roulage du véhicule, en ce que la réaction du véhicule, au comportement du moteur (1) et aux valeurs, déterminées directement précédemment, des variables, est calculée, une unité d'évaluation (7) étant prévue, calculant, d'après les valeurs mesurées au banc d'essai et les valeurs, calculées à partir de cela avec le modèle de simulation, pour des variables non mesurables, telles que la vitesse de véhicule (v), au moins une valeur d'évaluation (w), **caractérisé en ce qu'**une unité de superposition (8) est prévue, dans laquelle est stockée un autre modèle de simulation (9), calculant des variations, à fréquence plus élevées, de variables (n, M) mesurables en soi et procédant à la superposition aux valeurs de mesure effectives, lors du calcul de la grandeur d'évaluation (w).

8. Banc d'essai selon la revendication 7, **caractérisé en ce que** l'unité d'évaluation (8) est adaptative et sert directement à la commande du dispositif de commande de banc d'essai (4) électronique et/ou du dispositif de freinage (2).

9. Banc d'essai selon la revendication 7 ou 8, **caractérisé en ce que** l'unité de superposition (8) est prévue dans l'unité d'évaluation (7).

10. Banc d'essai selon la revendication 7 ou 8, **caractérisé en ce que** l'unité de superposition (8) est prévue dans le dispositif de commande de banc d'essai (4).

11. Banc d'essai selon l'une des revendications 7 à 10, **caractérisé en ce qu'**un dispositif de commande (6) électronique est prévu pour la commande du moteur (1), dispositif correspondant à celui du véhicule réel et relié au dispositif de commande de banc d'essai (4), pour être alimenté avec les valeurs de mesure, pour des variables mesurables, et avec les valeurs, calculées dans le premier modèle de simulation (5), pour des variables non mesurables.

**12.** Banc d'essai selon la revendication 11, **caractérisé en ce que** le dispositif de commande (6) est adaptatif, et **en ce que** la grandeur d'évaluation est sollicitée pour procéder à l'évaluation.

*Fig.1*

*Fig.2*

*Fig.3*